# EUROPEAN PATENT SPECIFICATION

(11) **EP 2 538 257 B1**
(45) Date of publication and mention of the grant of the patent: **04.08.2021**
(21) Application number: 12172686.3
(22) Date of filing: 20.06.2012
(51) Int. Cl.: G02B 6/44

(54) **TRAY FOR OPTICAL FIBRES**
SCHALE FÜR GLASFASERN
PLATEAU POUR FIBRES OPTIQUES

(30) Priority: 22.06.2011 IT MI20111136
(43) Date of publication of application: 26.12.2012
(73) Proprietor: Prysmian S.p.A., 20126 Milano (IT)
(72) Inventor: ABBIATI, Fabio, 20126 Milano (IT)
(74) Representative: Colombo, Stefano Paolo

(56) References cited:
- EP-A2- 1 870 750
- WO-A1-94/23324
- US-A1- 2009 290 842
- US-B1- 6 275 641
- None

## Description

The present invention relates to a tray for optical fibres. This tray can be used, for example, in the area of the installation of optical access networks.

A so-called FTTP ("Fibre-to-the-Premises") or FTTH ("Fibre-to-the-Home") network is an optical access network that supplies a number of end users with communication services that require data transmission rates of some hundreds of Mbit/s or even higher.

Typically, an FTTP or FTTH optical network comprises a station cabinet, a series of line joints, a termination or extraction joint and a distribution box. The latter is typically positioned in the basement or cellar of the building in which the end users reside. An optical cable, which will be called "riser cable" hereinafter, comes out of the distribution box and runs vertically inside the building from the basement or cellar up to each floor.

At each floor of the building it is possible to cut an access window in the sheath of the riser cable and extract one or more optical fibres from this. Each optical fibre extracted can be routed to the premises of a user on this floor. At any intermediate point between the access window and the user's premises, the optical fibre extracted can be spliced to an optical fibre of a drop cable. The splices between the optical fibres extracted from the riser cable at a floor of the building and the optical fibres of the drop cables installed on this floor are typically housed in suitable transition boxes.

The free end of each drop cable is typically located at the user's premises in a suitable termination box, so that the user can connect devices for using communication services (PC, set-top box, etc.) directly to this.

The station cabinets, the line joints or extraction joints, the distribution boxes, the transition boxes and the termination boxes can comprise one or more trays for housing the mechanical or fusion splices between optical fibres and/or any excess length of the optical fibres.

In the case when the cabinet, joint or box comprises several trays, these are typically stacked in order to minimize their overall dimensions. The stacked arrangement of the trays can be achieved by coupling all the trays rotatably along one of their edges to a common supporting structure. Alternatively, the trays can be coupled to one another rotatably along one of their edges. In both cases, once the trays are stacked, in order to gain access to an intermediate tray it is necessary to rotate the tray or trays situated above this through at least 90°, in order to free up the surface of the intermediate tray.

EP 1 870 750 describes a tray for optical fibres comprising two fastening pins arranged on one edge. The fastening pins can be inserted in corresponding holes of a supporting structure, so as to couple the tray rotatably to the supporting structure. The tray also comprises, on the same edge, two male pins and two female pins positioned externally to the fastening pins. The male pins and the female pins are positioned near the two opposite surfaces of the tray and allow the tray to be coupled to other similar trays, so as to allow several trays to be stacked without resorting to any supporting structure.

The tray described by EP 1 870 750 has some disadvantages.

The applicant has in fact observed that, for coupling together two trays similar to the tray described by EP 1 870 750, it is necessary to bring the male pins of the first tray into engagement with the female pins of the second tray. Mutually engaged, the male pins and the female pins define a rotation axis about which the two trays can rotate relative to one another.

During operations of installation or maintenance of the contents of the trays, it may happen that an operator pulls one of the two trays relative to the other one in a direction substantially perpendicular to the rotation axis. If the force with which the tray is pulled is excessive, the male pins might become detached from the female pins, causing accidental detachment of the two trays. This detachment might damage the optical fibres and/or the splices housed in the two trays, and even the pins themselves.

WO 94/23324 discloses an optical fibre organizer having a plurality of substantially mutually adjacent inlet ports and a plurality of mutually separated outlet ports, and means connecting the inlet ports and the outlet ports such that a fibre inserted into each inlet port will emerge from a predetermined outlet port.

US 6 275 641 discloses an optical fiber organizer including a plurality of optical fiber trays. Each tray has a top side for holding a fiber. Each tray has a hinge portion. The tray carrier has a plurality of sockets. Each socket is capable of receiving the hinge portion of a respective tray. Each tray has a first position on the tray carrier. The trays are stacked parallel to each other when the trays are in the first position. Each socket has an associated first detent, including a first boss below the socket, for maintaining its respective tray in the first position. Each socket has a second-position detent, including a second boss above the socket, for maintaining its respective tray in a second position about 90 degrees from the first position. The top side of one of the trays is exposed when at least one of the trays is in the second position. The hinge portion of the tray has a hole capable of receiving either the first boss or the second boss. The hinge portion of the tray has a pair of ramps adjacent the hole, for guiding either the first or second boss of the tray carrier to the hole.

US 2009/290842 discloses a splice tray including a splice region and a fiber management region to facilitate splicing together two or more fibers. The splice tray can be pivotally coupled to one or more additional splice trays using pivot linkages to form a splice tray arrangement. A pivot linkage can include first and second laterally spaced coupling sections extending in opposite directions. A magnetic coupling arrangement can releasably secure the splice trays of a splice tray arrangement to one another.

The present invention relates to a tray for optical fibres comprising a base and a sidewall that has a first edge (also called "bottom edge" hereinafter, along which the sidewall is joined to the base) and a second opposite edge (also called "top edge" hereinafter, which is free). At least two first pins project from the bottom edge towards the exterior of the tray, and at least two second pins project from the top edge towards the exterior of the tray. Both the first and the second pins are L-shaped. In particular, each of them has an elongated head and a stem that connects the head to the bottom or top edge of the sidewall. The heads of the first and of the second pins all extend in a direction parallel to the top and bottom edges of the sidewall. The heads of the first pins extend in a first direction, while the heads of the second pins extend in the opposite direction.

This tray can be coupled very stably to another similar tray. For coupling two trays together, the first pins of the tray above are brought into mutual engagement with the second pins of the tray below by performing an L-shaped movement, which also comprises a mutual translation of the trays along the direction in which the heads of the pins extend. To uncouple the trays it is therefore not sufficient to pull one tray relative to the other, but instead the L-shaped movement must be performed in reverse. It is very difficult for an operator to perform this movement accidentally. Therefore the risk of accidental detachment of the trays is minimal.

According to a first aspect of the present invention, a tray for optical fibres comprises a base and a sidewall, the sidewall comprising a first edge adjacent to the base and a second edge opposite the base, the tray further comprising:
- at least two first pins projecting from the first edge towards the exterior of the tray, each of the at least two first pins having a first head projecting towards a first direction of a first axis parallel to the first edge; and
- at least two second pins projecting from the second edge towards the exterior of the tray, each of the at least two second pins having a second projecting towards a second direction of a second axis parallel to the first axis, the second direction being opposite to the first direction.

According to particularly advantageous embodiments, the tray comprises at least three first pins and at least three second pins.

Preferably, the at least three first pins are substantially evenly distributed along the first axis and the at least three second pins are substantially evenly distributed along the second axis.

Preferably, the at least two first pins and the at least two second pins have substantially a same shape.

Preferably:
- each first pin also comprises a first stem connecting the first head to the first edge of the sidewall, the first stem projecting from the first edge along a third axis forming a first angle with a first plane parallel to the base; and
- each second pin also comprises a second stem connecting the second head to the second edge of the sidewall, the second stem projecting from the second edge along a fourth axis that forms a second angle with a second plane parallel to the base.

According to preferred embodiments, the first angle has the same amplitude as the second angle and is opposite to the second angle.

Preferably, the first angle and the second angle have an amplitude comprised between 20° and 40°.

Preferably:
- in each of the at least two first pins, the first stem is flexible, so as to connect the first head elastically to the sidewall; and
- in each of the at least two second pins, the second stem is flexible, so as to connect the second head elastically to the sidewall.

According to preferred embodiments, the tray also comprises a stop member provided on the sidewall between the at least two first pins and the at least two second pins, said stop member comprising a portion projecting parallel to the sidewall towards one of the first edge or the second edge.

According to a second aspect, an assembly is provided comprising a first tray for optical fibres and a second tray for optical fibres, wherein:
- the first tray comprises a first base and a first sidewall, the first sidewall comprising a first edge adjacent to the first base, the first tray further comprising at least two first pins projecting from the first edge towards the exterior of the first tray, each of the at least two first pins having a first head projecting towards a first direction of a first axis parallel to the first edge; and
- the second tray comprises a second base and a second sidewall, the second sidewall comprising a second edge opposite to the second base, the second tray further comprising at least two second pins projecting from the second edge towards the exterior of the second tray, each of the at least two second pins having a second head projecting towards a second direction of a second axis parallel to the first axis, the second direction being opposite to the first direction,
in which the at least two first pins are engaged with the at least two second pins so as to reciprocally rotatably fix the first tray and the second tray.

The present invention will become clearer from the following detailed description, given by way of non limiting example, to be read referring to the appended drawings in which:
- Fig. 1 is an axonometric view of a tray for optical fibres, according to one embodiment of the present invention;
- Fig. 2 is an enlarged view of a portion of the tray for optical fibres in Fig. 1;
- Fig. 3 is a side view of the tray for optical fibres in Fig. 1 ;
- Figs. 4a and 4b show two steps of the operation of coupling together two trays for optical fibres similar to the tray in Figs. 1-3;
- Figs. 5a and 5b are side views of the two trays in the closed position and in the opened position, respectively;
- Fig. 6 shows three trays stacked in the closed position; and
- Fig. 7 shows five trays stacked in the opened position.

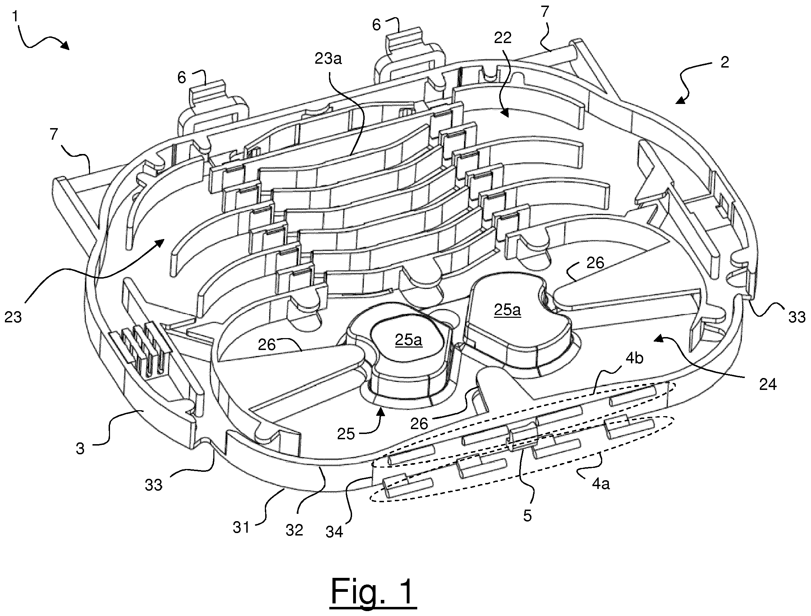

Figs. 1-3 show a tray for optical fibres 1 according to one embodiment of the present invention. The tray 1 can for example be housed in a box, for example a distribution box, a transition box or a termination box of an FTTP or FTTH network.

The tray 1 is preferably configured for housing a number of splices (for example, fusion splices) between optical fibres and any excess length of the spliced optical fibres.

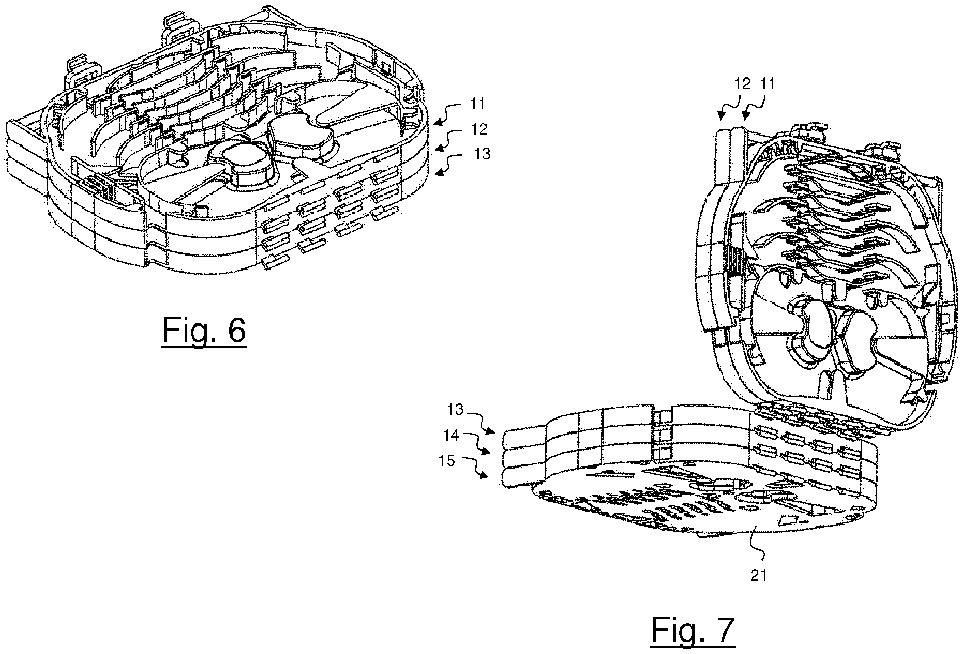

In particular, the tray 1 comprises a substantially flat base 2, which has two opposite surfaces: a working surface (also called "upper surface" hereinafter) 22 and a surface opposite to the working surface (also called "lower surface" hereinafter) 21 (seen more clearly in Fig. 7).

The base 2 has a substantially rectangular shape with rounded corners. The corners of base 2 preferably have a radius of curvature greater than a minimum bending radius, which depends on the type of optical fibre to be housed in device 1. For example, for optical fibres of the type defined by the Recommendation ITU-T G.652D, the minimum bending radius to which the optical fibres can be bent with acceptable losses is 30 mm. This is only an example, as the base 2 can have any other shape (for example, square with rounded corners, elliptical, etc.).

The working or upper surface 22 of base 2 comprises a splice housing portion 23 and a fibre housing portion 24. The splice housing portion 23 preferably comprises a number of splice-carrying elements 23a side by side, each of which is able to house one or more splices between optical fibres. The fibre housing portion 24 comprises a mandrel 25 in the shape of a cylinder with axis substantially perpendicular to the upper surface 22. More particularly, according to this embodiment, the mandrel 25 comprises two lobes 25a. Preferably, the fibre housing portion 24 also comprises one or more fins 26 that project from the edges of the portion for housing fibres 24 towards the axis of the mandrel 25. The fins 26 are flat and extend parallel to the upper surface 22 of base 2.

The tray 1 further comprises a sidewall 3 arranged substantially along the entire perimeter of base 2. The sidewall 3 projects from the perimeter of base 2 in a direction substantially perpendicular thereto on the same side of the upper surface 22, so as to enclose the splice housing portion 23 and the fibre housing portion 24. The sidewall 3 has a first edge 31 (also called "bottom edge" hereinafter) joined to the perimeter of base 2 and a second opposite edge (also called "top edge" hereinafter) 32 that is free. The sidewall 3 preferably further comprises at least two openings 33, through which the optical fibres can enter and exit from tray 1.

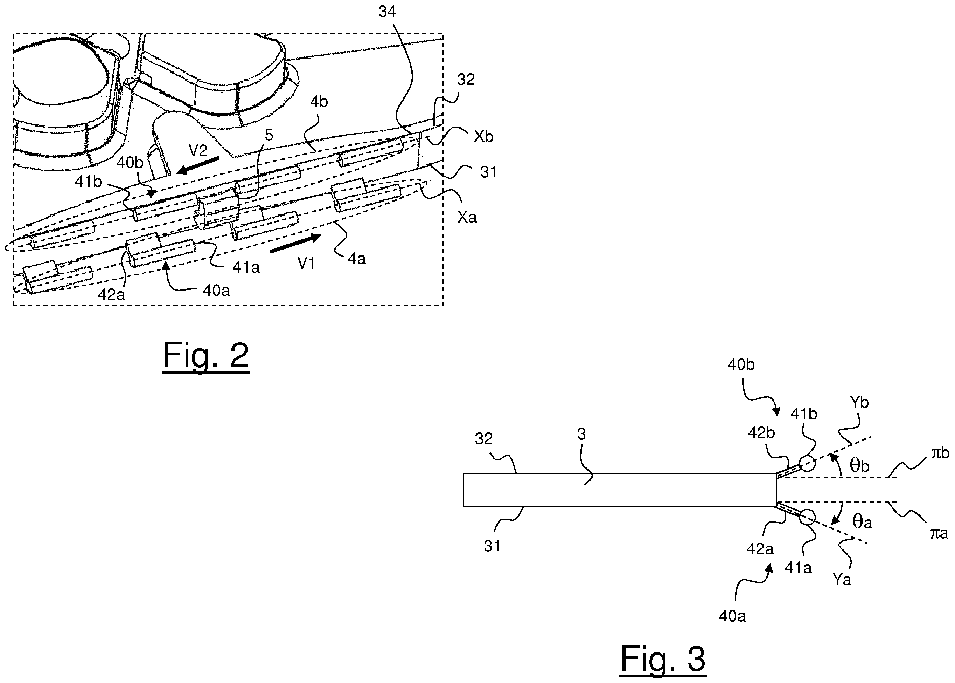

The tray 1 further comprises pins 40a, 40b (shown in Figs. 2 and 3) for rotatably coupling tray 1 to another similar tray. The pins 40a, 40b are arranged on a substantially rectilinear portion 34 of the sidewall 3 so that they project towards the exterior of the tray 1. Preferably, the substantially rectilinear portion 34 of the sidewall 3 on which pins 40a, 40b are arranged corresponds to one of the long sides of base 2 (which, according to this embodiment, is substantially rectangular with rounded corners). Corresponding to portion 34, the bottom edge 31 and the top edge 32 of the sidewall 3 are parallel to one another.

Pins 40a, 40b are arranged on sidewall 3 to form a first row of pins 4a and a second row of pins 4b, each of which comprises at least two pins, preferably at least three pins. The first row of pins 4a and the second row of pins 4b each comprise an identical number of pins 40a, 40b. In the embodiment shown in the drawings, the first row of pins 4a and the second row of pins 4b each comprise four pins 40a, 40b.

Referring to the first row of pins 4a, each pin 40a is preferably L-shaped. In particular, each pin 40a comprises a head 41a in the form of a small cylinder and a flat stem 42a substantially perpendicular to the head 41a. The stem 42a connects the head 41a to the sidewall 3 so that the head 41a is aligned with a first axis Xa substantially parallel to edges 31, 32 of the sidewall 3 corresponding to portion 34. In particular, the head 41a projects from the stem 42a in a first direction indicated by the arrow V1 of the first axis Xa. The pins 40a of the first row 4a have heads 41a aligned with one another along the first axis Xa and are preferably evenly distributed along the first axis Xa. The distance between the stems 42a of two adjacent pins 40a is preferably greater than the length of a head 41a.

Referring now to the second row of pins 4b, the pins 40b preferably have shape and dimensions at least compatible, if not similar to those of pins 40a of the first row 4a. In particular, each pin 40b comprises a head 41b in the form of a small cylinder and a flat stem 42b substantially perpendicular to the head 41b. The stem 42b connects the head 41b of pin 40b to the sidewall 3 so that the head 41b is aligned with a second axis Xb substantially parallel to the first axis Xa, i.e. this too is parallel to the edges 31, 32 of the sidewall 3 corresponding to portion 34. In particular, the head 41b projects from the stem 42b in a second direction indicated by the arrow V2 of the second axis Xb, which is opposite to the first direction V1. The pins 40b of the second row 4b have heads 41b aligned with one another along the second axis Xb and are preferably evenly distributed along the second axis Xb, in positions corresponding to the pins 40a of the first row 4a. Therefore, also in the second row 4b, the distance between the stems 42b of two adjacent pins 40b is preferably greater than the length of a head 41b.

Referring again to the first row of pins 4a, in each pin 40a the stem 42a extends from the bottom edge 31 of the sidewall 3 towards the exterior of the tray 1 and towards the lower surface 21 of base 2, as shown in Fig. 3. In particular, stem 42a extends from the bottom edge 31 of the sidewall 3 along a third axis Ya that forms an angle θa with a plane πa parallel to the base 2 of the tray, the projection of which is drawn in Fig. 3. The angle θa is preferably between 20° and 40°, more preferably between 30° and 35°. The stem 42a is flexible and elastic, so as to connect head 41a elastically to the sidewall 3. The length of the stem 42a is greater than or equal to the diameter of the head 41a.

Regarding the second row of pins 4b, the stem 42b of each pin 40b extends from the top edge 32 of the sidewall 3 towards the exterior of the tray 1 and towards the upper surface 22 of base 2, as shown in Fig. 3. In particular, stem 42b extends from the top edge 32 of the sidewall 3 along a fourth axis Yb that forms an angle θb with a plane πb parallel to the base 2, the projection of which is drawn in Fig. 3. The angle θb preferably has substantially the same magnitude as angle θa and is opposite to it. Also in the pins 40b of the second row 4b, the stem 42b is flexible and elastic, so as to connect the head 41b elastically to the sidewall 3. The length of stem 42b is greater than or equal to the diameter of head 41b.

The tray 1 preferably also comprises at least one stop member 5 (Figs. 1 and 2). The stop member 5 preferably projects from portion 34 of the sidewall 3 towards the exterior of the tray 1. The stop member 5 preferably comprises an L-shaped body having a first section that projects from the sidewall 3 towards the exterior of the tray 1 in a direction substantially perpendicular to the sidewall 3 and a second section that extends parallel to sidewall 3 and perpendicularly to axes Xa, Xb. In the embodiment shown in the drawings, the second section of stop member 5 extends towards the top edge 32 of the sidewall 3 and ends substantially flush with the top edge 32. The length of the first section of stop member 5 is preferably greater than the diameter of the head of pins 40a, 40b, so that between the second section of the stop member 5 and the sidewall 3, a space is formed with width greater than the diameter of the head of pins 40a, 40b.

The stop member 5 is preferably positioned corresponding to one of the free spaces between the heads of two adjacent pins 40a, and therefore also of the corresponding free space between the heads of two adjacent pins 40b. In the embodiment shown in the drawings, which comprises four pins 40a, 40b for each row 4a, 4b, the stop member 5 is positioned corresponding to the free space between the heads of the two central pins 40a, i.e. substantially corresponding to the median position of the portion of wall 34 along the parallel axes Xa, Xb.

The tray 1 moreover preferably comprises at least one closing element 6. By way of non-limiting example, tray 1 shown in the drawings comprises two closing elements 6. The closing elements 6 are arranged along one edge of base 2, in particular the edge opposite to that along which the pins 40a, 40b are provided. Preferably, the closing elements 6 are in an intermediate position relative to the two hinges 5. Each closing element 6 preferably comprises a snap hook that projects from the top edge 32 of the sidewall 3 in a direction parallel thereto.

The tray 1 further comprises, corresponding to each closing element 6, a closing projection (not visible in the drawings) positioned near the bottom edge 31 of the sidewall 3. Each closing projection of tray 1 is suitable for engaging with the closing element 6 of a tray below, to keep the trays in the closed position, as will be described in greater detail below.

The tray 1 preferably also comprises a pair of hinges 7 able to couple tray 1 to a supporting structure. The hinges 7 are preferably arranged along one edge of base 2, in particular the edge opposite to that along which the pins 40a, 40b are provided.

The tray 1 preferably has a width between 10 cm and 20 cm and a length between 5 cm and 15 cm.

The tray 1 is preferably made in one piece by moulding a plastic. The plastic used can for example be ABS (acrylonitrile-butadiene-styrene).

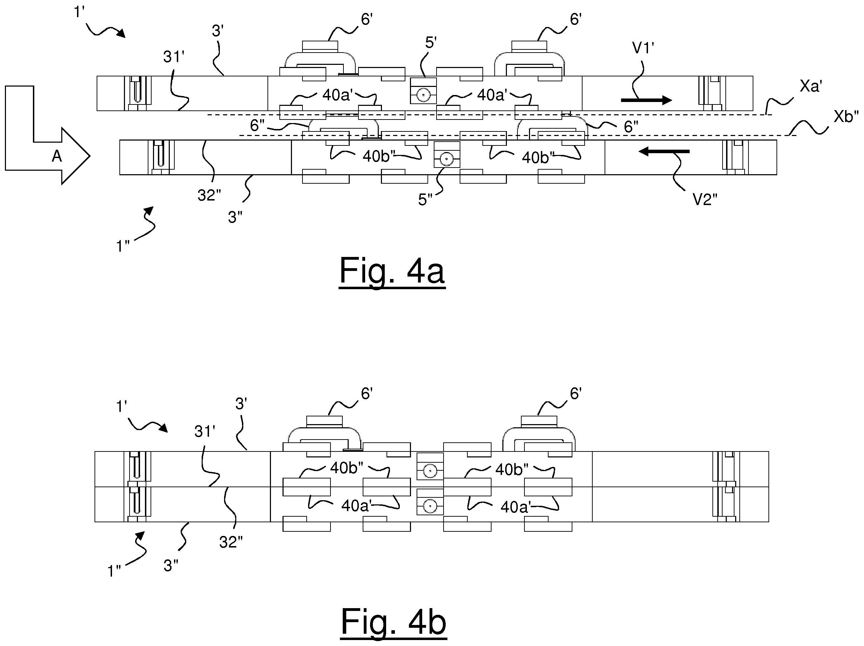

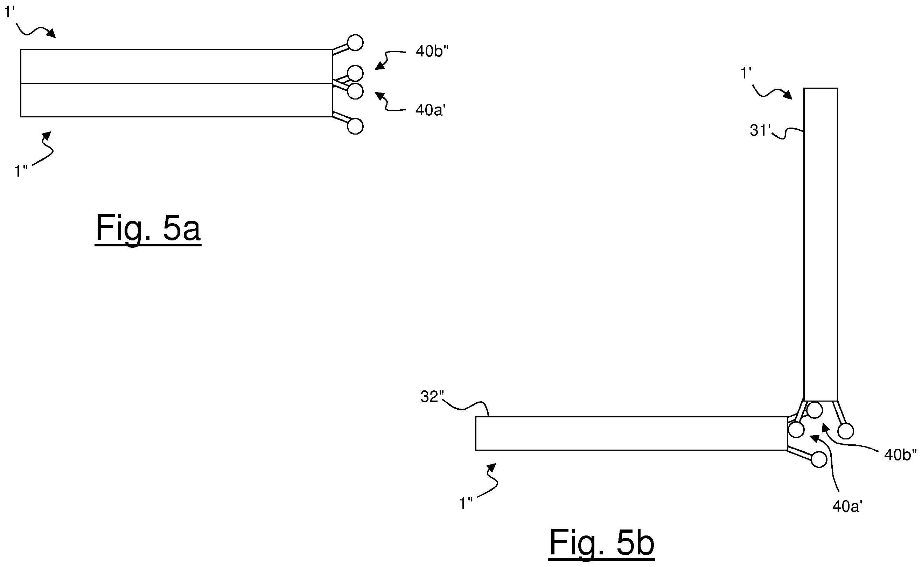

Referring to Figs. 4a, 4b, 5a and 5b, the procedure will now be described for coupling together two trays 1' and 1" for optical fibres similar to tray 1 in Figs. 1-3 so that they are stacked.

Firstly, the operator preferably positions trays 1' and 1" so that they are on top of one another. In particular, tray 1' is positioned above tray 1" and therefore will also be called "the tray above" hereinafter, while tray 1" will also be called "the tray below".

The pins 40a' that project from the bottom edge 31' of the sidewall of the tray above 1' are thus opposite the pins 40b" that project from the top edge 32" of the sidewall of the tray below 1". The pins 40a' of the tray above 1' and the pins 40b" of the tray below 1" have their respective heads extending from their respective stems along parallel axes Xa' and Xb", but in opposite directions V1' and V2", indicated in Fig. 4a.

The operator preferably positions trays 1' and 1" in such a way that the pins 40a' of the tray above 1' and the pins 40b" of the tray below 1" are mutually staggered along the parallel axes Xa' and Xb". In particular, pins 40a' are displaced in the direction V2" relative to pins 40b" (and, similarly, pins 40b" are displaced in the direction V1' relative to pins 40a'), so that the heads of pins 40a' (except the first pin 40a' in an order that follows the direction V1') are aligned - in a direction perpendicular to axes Xa' and Xb" - with the free spaces present between the stems of pins 40b" and so that, conversely, the heads of pins 40b" (except the first pin 40b" in an order that follows the direction V2") are aligned - in a direction perpendicular to axes Xa' and Xb" - with the free spaces present between the stems of pins 40a'.

The operator then preferably rotates trays 1', 1" relative to one another about the parallel axes Xa' and Xb", so that the bases of trays 1', 1" are tilted relative to one another, and the bottom edge 31' of the tray above 1' and the top edge 32" of the tray below 1" are brought closer together.

The tilt angle formed by the bases of trays 1', 1" for performing this operation has an optimum value that depends substantially on the angles θa' and θb" that the stems of pins 40a' and 40b" make with the planes πa' and πb" parallel to the respective bases. In particular, the optimum value of the tilt angle between the two bases is that for which the stems of pins 40a' and the stems of pins 40b" are substantially perpendicular to one another. The optimum angle of mutual inclination between the bases of trays 1', 1" is therefore preferably substantially equal to the complementary angle of θa'+θb". For example, if angles θa' and θb" are both about 32°, the optimum angle of inclination between the bases of the two trays 1, 1" is about 26°.

During the movement of mutual approach between the bottom edge 31' of the tray above 1' and the top edge 32" of the tray below 1", the heads of pins 40a' aligned with the spaces between the stems of pins 40b" go through these spaces and engage in the space between the stems of pins 40b" and the sidewall of the tray below 1", near its top edge 32". Similarly, the heads of pins 40b" aligned with the spaces between the stems of pins 40a' go through these spaces and engage in the space between the stems of pins 40a' and the sidewall of the tray above 1', near its bottom edge 31'. Moreover, the head of pin 40a', which is aligned with the space between the two pins 40b" corresponding to which the stop member 5" is positioned (in Fig. 4a, the head of the third pin 40a' in the order following the direction V1'), is inserted in the space between the sidewall 3" and the stop member 5" of the tray below 1".

The movement of mutual approach ends when the bottom edge 31' of the sidewall of the tray above 1' is substantially up against the top edge 32" of the sidewall of the tray below 1".

Next, the operator preferably moves trays 1', 1" relative to one another along the parallel axes Xa', Xb". In particular, the tray above 1' (whose pins 40a' have their heads turned in the direction V1') is pushed in the direction V1' relative to the tray below 1" or, similarly, the tray below 1" (whose pins 40b" have their heads turned in the direction V2") is pushed in the direction V2" relative to the tray above 1', until the stems of pins 40b" come up against the stems of pins 40a'. With this translational movement along the parallel axes Xa', Xb", the head of pin 40a' that had been inserted in the space between the sidewall 3" and the stop member 5" of the tray below 1" comes out of this space and takes up a position near the stop member 5", in particular immediately after it in the direction V1'.

The combination of the movement of mutual approach of the bottom edge 31 of the tray above 1' and of the top edge 32" of the tray below 1" and of the movement of mutual translation of trays 1', 1" along the parallel axes Xb' and Xa" substantially constitutes an L-shaped movement, which is indicated schematically by arrow A shown in Fig. 4a.

Once the L-shaped movement has been executed, the pins 40a', 40b" are in mutual engagement and thus link trays 1', 1" together.

From this position, trays 1' and 1" can then be rotated relative to one another to be brought into a closed position or into an opened position.

In the closed position (shown in Fig. 4b), the lower surface of the tray above 1' covers substantially completely the upper surface of the tray below 1". In this position, the heads of pins 40a' and 40b" are in mutual contact, as shown in Fig. 5a. In the case when the heads of pins 40a' and 40b" come into mutual contact before trays 1', 1" are in the closed position, the stems of pins 40a' and 40b" can flex slightly, so as to allow complete closure.

In the case when, in the closed position, the tray above 1' is pulled deliberately or accidentally in the direction V2" relative to the tray below 1", the pin 40a', located immediately after the stop member 5" in the direction V1', comes up against the stop member 5", which acts as a stopper. In the closed position, in fact, the head of pin 40a' moves away from the sidewall 3" of the tray below 1" (as shown in Fig. 5a) and is thus misaligned relative to the space formed by the stop member 5" and the sidewall 3" of the tray below 1". The head of pin 40a' therefore cannot be inserted in this space solely by mutual translation of trays 1' and 1" along the parallel axes Xa', Xb". The stop member 5" thus impedes translation of the tray above 1' relative to the tray below 1" in the direction V2", and therefore detachment of the two trays 1', 1".

When trays 1', 1" are in the closed position, the closing elements 6" of the tray below 1" (visible in Fig. 4a) that project beyond the top edge 32" of the sidewall engage the closing projections positioned near the bottom edge 31' of the sidewall of the tray above 1', in order to hold the two trays 1' and 1" firmly in the closed position.

From the closed position, trays 1', 1" can be brought into the opened position, in which it is possible to have free access to the upper surface of the tray below 1". To bring trays 1', 1" into the opened position, the operator preferably releases the closing elements 6" of the tray below 1" and rotates the tray above 1' relative to the tray below 1" through an angle greater than or equal to about 90°.

The movement of rotation of the tray above 1' relative to the tray below 1" is guided by the engagement between pins 40a' and 40b". This movement of rotation does not take place about a fixed rotation axis. Between pins 40a' and 40b" there is in fact a clearance that allows a movement of the rotation axis about which the tray above 1' rotates. The movement of the tray above 1' relative to the tray below 1" thus comprises a plurality of rotation-translations and not a single rotation about a fixed axis.

Tray 1' is rotated relative to tray 1" until the heads of pins 40a', 40b" come up against the stems of pins 40b", 40a' and the sidewall of tray 1", 1' respectively, as shown in Fig. 5b. In the case when the heads of pins 40a', 40b" come up against the stems of pins 40b", 40a' and the sidewall of tray 1", 1', respectively, before tray 1' has been rotated through at least 90° relative to tray 1", the stems of pins 40a' and 40b" can flex slightly, so as to allow complete opening. The magnitude of the tilt angles θa' and θb" of the stems of pins 40a' and 40b" (which, as mentioned above, is preferably between 20° and 40°, more preferably between 30° and 35°) is selected in order to distribute the bending stress of the stems between the closed position and the opened position.

Trays 1' and 1" advantageously are coupled together very stably. In fact even if an operator were accidentally to pull tray 1' relative to tray 1" in a direction substantially perpendicular to the parallel axes Xa', Xb", this pulling would not be able to disengage pins 40a' and 40b". Disengagement of pins 40a' and 40b" occurs on performing the L-shaped movement indicated by arrow A in reverse, a movement that first comprises a translation of the two trays 1', 1" relative to one another along the parallel axes Xa', Xb" in order to realign the heads of pins 40a' and 40b" with the spaces between the stems of pins 40b" and 40a', respectively, and then separation of the two trays 1' and 1" in a direction perpendicular to the parallel axes Xa', Xb". This movement in reverse requires a predetermined sequence and a certain precision, therefore it is unlikely that this could be executed accidentally by the operator. Moreover, when the two trays 1', 1" are in the closed position, translation of the two trays 1', 1" relative to one another along the parallel axes Xa', Xb" can be impeded by the stop member 5", if present. The risk of accidental detachment of trays 1' and 1" is therefore minimal.

Advantageously, in the case when trays 1, 1" comprise rows of pins each comprising at least three pins, accidental breakage of one pin does not compromise the stability of coupling between trays 1', 1". If for example one of the pins 40a' of the tray above 1' were to be broken accidentally, coupling between the two trays 1', 1" would still be ensured by the other three pairs of pins 40a', 40b".

Although in the foregoing description only the coupling of two trays 1' and 1" is described in detail, the structure of tray 1 advantageously allows stacking of any number of trays similar to tray 1, coupled together by means of the pins 40a, 40b.

Fig. 6 shows, for purposes of illustration, three trays 11, 12 and 13 similar to tray 1, coupled together in a closed stacked position. Fig. 7 shows, still as an example, five trays 11, 12, 13, 14, 15 similar to tray 1, coupled together in the opened stacked position in order to allow free access to one of the intermediate trays, i.e. tray 13. For simplicity, the stop members of the trays are not shown in Figs. 6 and 7.

In both of the illustrative arrangements of stacked trays shown in Figs. 6 and 7, each intermediate tray is coupled to the tray below by means of its own pins that project from the bottom edge of its own sidewall (similarly to the tray above 1' in Figs. 4a, 4b, 5a, 5b) and is moreover coupled to the tray above by means of its own pins that project from the top edge of its own sidewall (similarly to the tray below 1" in Figs. 4a, 4b, 5a, 5b). To gain access to one of the intermediate trays (for example, tray 13 in Fig. 7), all the trays above (i.e. trays 11, 12 in Fig. 7) are rigidly rotated through approx. 90° about the pins that couple the intermediate tray to which access is required with the tray directly above it (i.e. tray 12 in Fig. 7), as shown in Fig. 7.

Although not shown in the drawings, tray 1 can be coupled, optionally together with other similar trays, to a common supporting structure, by means of its own hinges 7. Tray 1 can therefore, depending on the applications, be stacked with other similar trays either by using a common supporting structure, or by directly coupling the tray to other similar trays by means of pins 40a, 40b, without using any common structure.

## Claims

1. A tray (1, 1') for optical fibres comprising a base (2) and a sidewall (3), said sidewall (3) comprising a first edge (31) adjacent to said base (2) and a second edge (32) opposite to said base (2), said tray (1, 1') further comprising pins (40a, 40b) for rotatably coupling said tray (1, 1') to another similar tray (1"), said pins (40a, 40b) comprising:
- at least two first pins (40a) projecting from said first edge (31) towards an exterior of said tray (1), each of said at least two first pins (40a) having a first head (41a) projecting towards a first direction (V1) of a first axis (Xa) parallel to said first edge (31); and
- at least two second pins (40b) projecting from said second edge (32) towards an exterior of said tray (1), each of said at least two second pins (40b) having a second head (41b) projecting towards a second direction (V2) of a second axis (Xb) parallel to said first axis (Xa), said second direction (V2) being opposite to said first direction (V1).

2. The tray (1) according to claim 1, comprising at least three first pins (40a) and at least three second pins (40b).

3. The tray (1) according to claim 2, wherein said at least three first pins (40a) are substantially evenly distributed along said first axis (Xa) and wherein said at least three second pins (40b) are substantially evenly distributed along said second axis (Xb).

4. The tray (1) according to claim 1, wherein said at least two first pins (40a) and said at least two second pins (40b) have substantially a same shape.

5. The tray (1) according to claim 1, wherein:
- each first pin (40a) comprises also a first stem (42a) connecting said first head (41a) to said first edge (31) of said sidewall (3), said first stem (42a) projecting from said first edge (31) along a third axis (Ya) forming a first angle (θa) with a first plane (πa) parallel to said base (2); and
- each second pin (40b) comprises also a second stem (42b) connecting said second head (41b) to said second edge (32) of said sidewall (3), said second stem (42b) projecting from said second edge (32) along a fourth axis (Yb) forming a second angle (θb) with a second plane (πb) parallel to said base (2).

6. The tray (1) according to claim 5, wherein said first angle (θa) has the same amplitude as said second angle (θb) and is opposite to said second angle (θb).

7. The tray (1) according to claim 5, wherein each of said first angle (θa) and said second angle (θb) has an amplitude comprised between 20° and 40°.

8. The tray (1) according to claim 5, wherein:
- in each of said at least two first pins (40a), said first stem (42a) is flexible; and
- in each of said at least two second pins (40b), said second stem (42b) is flexible.

9. The tray (1) according to claim 1, further comprising a stop member (5) provided on said sidewall (3) between said at least two first pins (40a) and said at least two second pins (40b), said stop member (5) comprising a portion projecting parallel to said sidewall (3) towards one of said first edge (31) and said second edge (32).

10. An assembly comprising a first tray for optical fibers (1') according to claim 1 and a second tray for optical fibers (1") according to claim 1, wherein the at least two first pins (40a') of said first tray (1') are engaged with the at least two second pins (40b") of said second tray (1") so as to reciprocally rotatably fix said first tray (1') and said second tray (1").

## Patentansprüche

1. Ablage (1, 1') für optische Fasern mit einer Basis (2) und einer Seitenwand (3), wobei die Seitenwand (3) eine erste Kante (31) angrenzend an die Basis (2) und eine zweite Kante (32) gegenüber der Basis (2) aufweist, wobei die Ablage (1, 1') ferner Stifte (40a, 40b) zum drehbaren Koppeln der Ablage (1, 1') mit einer anderen ähnlichen Ablage (1") aufweist, wobei die Stifte (40a, 40b) umfassen:
- mindestens zwei erste Stifte (40a), die von der ersten Kante (31) in Richtung einer Außenseite der Ablage (1) vorstehen, wobei jeder der mindestens zwei ersten Stifte (40a) einen ersten Kopf (41a) aufweist, der in eine erste Richtung (V1) einer ersten Achse (Xa) parallel zu der ersten Kante (31) vorsteht; und
- mindestens zwei zweite Stifte (40b), die von der zweiten Kante (32) in Richtung einer Außenseite der Ablage (1) vorstehen, wobei jeder der mindestens zwei zweiten Stifte (40b) einen zweiten Kopf (41b) aufweist, der in Richtung einer zweiten Richtung (V2) einer zweiten Achse (Xb) parallel zu der ersten Achse (Xa) vorsteht, wobei die zweite Richtung (V2) entgegengesetzt zu der ersten Richtung (V1) ist.

2. Ablage (1) nach Anspruch 1, umfassend mindestens drei erste Stifte (40a) und mindestens drei zweite Stifte (40b).

3. Ablage (1) nach Anspruch 2, wobei die mindestens drei ersten Stifte (40a) im Wesentlichen gleichmäßig entlang der ersten Achse (Xa) verteilt sind und wobei die mindestens drei zweiten Stifte (40b) im Wesentlichen gleichmäßig entlang der zweiten Achse (Xb) verteilt sind.

4. Ablage (1) nach Anspruch 1, wobei die mindestens zwei ersten Stifte (40a) und die mindestens zwei zweiten Stifte (40b) im Wesentlichen die gleiche Form haben.

5. Ablage (1) nach Anspruch 1, wobei:
- jeder erste Stift (40a) auch einen ersten Schaft (42a) umfasst, der den ersten Kopf (41a) mit der ersten Kante (31) der Seitenwand (3) verbindet, wobei der erste Schaft (42a) von der ersten Kante (31) entlang einer dritten Achse (Ya) vorsteht, die einen ersten Winkel (Oa) mit einer ersten Ebene (na) parallel zu der Basis (2) bildet; und
- jeder zweite Stift (40b) auch einen zweiten Schaft (42b) umfasst der den zweiten Kopf (41b) mit der zweiten Kante (32) der der Seitenwand (3) verbindet, wobei der zweite Schaft (42b) von der zweiten Kante (32) entlang einer vierten Achse (Yb) vorsteht, die einen zweiten Winkel (Ob) mit einer zweiten Ebene (7rb) parallel zu der Basis (2) bildet.

6. Ablage (1) nach Anspruch 5, wobei der erste Winkel (Oa) die gleiche Amplitude wie der zweite Winkel (Ob) hat und entgegengesetzt zu dem zweiten Winkel (Ob) ausgerichtet ist.

7. Ablage (1) nach Anspruch 5, wobei sowohl der erste Winkel (Oa) als auch der zweite Winkel (Ob) eine Amplitude zwischen 20° und 40° aufweist.

8. Ablage (1) nach Anspruch 5, wobei:
- in jedem der mindestens zwei ersten Stifte (40a) der erste Stiel (42a) flexibel ist; und
- in jedem der mindestens zwei zweiten Stifte (40b) der zweite Stiel (42b) flexibel ist.

9. Ablage (1) nach Anspruch 1, ferner umfassend ein Anschlagelement (5), das an der Seitenwand (3) zwischen den mindestens zwei ersten Stiften (40a) und den mindestens zwei zweiten Stiften (40b) vorgesehen ist, wobei das Anschlagelement (5) einen Abschnitt aufweist, der parallel zu der Seitenwand (3) in Richtung einer der ersten Kante (31) und der zweiten Kante (32) vorsteht.

10. Anordnung mit einer ersten Ablage für optische Fasern (1') nach Anspruch 1 und eine zweite Ablage für optische Fasern (1") nach Anspruch 1, wobei die mindestens zwei ersten Stifte (40a') der ersten Ablage (1') mit den mindestens zwei zweiten Stiften (40b") der zweiten Ablage (1") in Eingriff stehen, um die erste Ablage (1') und die zweite Ablage (1") wechselseitig drehbar zu fixieren.

## Revendications

1. Plateau (1, 1') pour fibres optiques comprenant une base (2) et une paroi latérale (3), ladite paroi latérale (3) comprenant un premier bord (31) adjacent à ladite base (2) et un second bord (32) opposé à ladite base (2), ledit plateau (1, 1') comprenant en outre des broches (40a, 40b) pour coupler de manière rotative ledit plateau (1, 1') à un autre plateau (1") similaire, lesdites broches (40a, 40b) comprenant :
- au moins deux premières broches (40a) faisant saillie à partir dudit premier bord (31) vers un extérieur dudit plateau (1), chacune desdites au moins deux premières broches (40a) présentant une première tête (41a) faisant saillie vers une première direction (V1) d'un premier axe (Xa) parallèle audit premier bord (31) ; et
- au moins deux secondes broches (40b) faisant saillie à partir dudit second bord (32) vers un extérieur dudit plateau (1), chacune desdites au moins deux secondes broches (40b) présentant une seconde tête (41b) faisant saillie vers une seconde direction (V2) d'un deuxième axe (Xb) parallèle audit premier axe (Xa), ladite seconde direction (V2) étant opposée à ladite première direction (V1).

2. Plateau (1) selon la revendication 1, comprenant au moins trois premières broches (40a) et au moins trois secondes broches (40b).

3. Plateau (1) selon la revendication 2, dans lequel lesdites au moins trois premières broches (40a) sont réparties de manière sensiblement régulière le long dudit premier axe (Xa) et dans lequel lesdites au moins trois secondes broches (40b) sont réparties de manière sensiblement régulière le long dudit deuxième axe (Xb).

4. Plateau (1) selon la revendication 1, dans lequel lesdites au moins deux premières broches (40a) et lesdites au moins deux secondes broches (40b) présentent sensiblement une même forme.

5. Plateau (1) selon la revendication 1, dans lequel :
- chaque première broche (40a) comprend également une première tige (42a) reliant ladite première tête (41a) audit premier bord (31) de ladite paroi latérale (3), ladite première tige (42a) faisant saillie à partir dudit premier bord (31) le long d'un troisième axe (Ya) formant un premier angle (θa) avec un premier plan (na) parallèle à ladite base (2) ; et
- chaque seconde broche (40b) comprend également une seconde tige (42b) reliant ladite seconde tête (41b) audit second bord (32) de ladite paroi latérale (3), ladite seconde tige (42b) faisant saillie à partir dudit second bord (32) le long d'un quatrième axe (Yb) formant un second angle (θb) avec un second plan (πb) parallèle à ladite base (2).

6. Plateau (1) selon la revendication 5, dans lequel ledit premier angle (θa) présente la même amplitude que ledit second angle (θb) et est opposé audit second angle (θb).

7. Plateau (1) selon la revendication 5, dans lequel chacun dudit premier angle (θa) et dudit second angle (θb) présente une amplitude comprise entre 20° et 40°.

8. Plateau (1) selon la revendication 5, dans lequel :
- dans chacune desdites au moins deux premières broches (40a), ladite première tige (42a) est souple ; et
- dans chacune desdites au moins deux secondes broches (40b), ladite seconde tige (42b) est souple.

9. Plateau (1) selon la revendication 1, comprenant en outre un élément d'arrêt (5) fourni sur ladite paroi latérale (3) entre lesdites au moins deux premières broches (40a) et lesdites au moins deux secondes broches (40b), ledit élément d'arrêt (5) comprenant une partie faisant saillie parallèle à ladite paroi latérale (3) vers l'un dudit premier bord (31) et dudit second bord (32).

10. Ensemble comprenant un premier plateau pour fibres optiques (1') selon la revendication 1 et un second plateau pour fibres optiques (1") selon la revendication 1, dans lequel les au moins deux premières broches (40a') dudit premier plateau (1') sont en prise avec les au moins deux secondes broches (40b") dudit second plateau (1") de façon à fixer de manière réciproque et rotative ledit premier plateau (1') et ledit second plateau (1").
